# EUROPÄISCHE PATENTSCHRIFT

(11) **EP 2 872 800 B1**
(45) Veröffentlichungstag und Bekanntmachung des Hinweises auf die Patenterteilung: **13.04.2016**
(21) Anmeldenummer: 13745363.5
(22) Anmeldetag: 10.07.2013
(51) Int. Cl.: F16J 15/16, F16J 15/18

(54) **VERFAHREN UND VORRICHTUNG ZUR BEHANDLUNG EINES PRODUKTES**
METHOD AND APPARATUS FOR HANDLING A PRODUCT
PROCÉDÉ ET DISPOSITIF POUR MANIPULER UN PRODUIT

(30) Priorität: 11.07.2012 DE 102012106239
(43) Veröffentlichungstag der Anmeldung: 20.05.2015
(73) Patentinhaber: LIST Holding AG, 4422 Arisdorf (CH)
(72) Erfinder: WITTE, Daniel, 79639 Grenzach-Wyhlen (DE); KUNZ, Alfred, CH-4132 Muttenz (CH)
(74) Vertreter: Patentanwälte und Rechtsanwalt Weiß, Arat & Partner mbB
(86) Internationale Anmeldenummer: PCT/EP2013/064532
(87) Internationale Veröffentlichungsnummer: WO 2014/009393

(56) Entgegenhaltungen:
- AT-B- 326 435
- CN-U- 201 552 666
- GB-A- 348 321
- GB-A- 1 081 867
- GB-A- 1 088 035
- US-A- 2 684 274
- US-A- 2 864 631
- US-A- 4 484 753

## Beschreibung

Die Erfindung betrifft ein Verfahren zur Behandlung eines Produktes, insbesondere eines zähviskos, pastösen Produktes mit mindestens einer drehenden Welle in einem Produktraum, wobei eine Antriebsachse der Welle ausserhalb des Produktraumes in einem aus mehreren Teilen bestehenden Gehäuse gelagert und abgedichtet ist und die Abdichtung durch zumindest zwei Dichtungen bewirkt wird, wobei eine dynamische Dichtung einer exzentrischen Bewegung der Welle folgt und eine dynamische Abdichtung der drehenden Welle übernimmt, während eine andere Dichtung eine exzentrische Bewegung der Welle gegenüber dem Gehäuse durch plastische oder elastische Verformung ausgleicht und somit eine Undichtigkeit zwischen dem Gehäuseteil, das sich exzentrisch bewegt, und einem starren Gehäuse verhindert, sowie eine Vorrichtung hierfür.

### Stand der Technik

Übliche Rührbehälter bestehen jeweils aus einem Rührorgan und einem Behälter, in dem das Rührorgan dreht. Der Behälter dient als Absperrung des Produktraumes gegenüber der Umgebung, so dass Substanzen aus der Umgebung nicht in den Behälter eindringen oder aus dem Produktraum in die Umgebung entweichen können. Von einem offenen Behälter wird gesprochen, wenn das Produkt im Behälter genügend schwer ist, so dass es im Behälter durch die Erdgravitation bleibt und dadurch der Behälter nach oben offen ist.

Der Antrieb des Rührorgans muss so gestaltet werden, dass das Produkt nicht über die Welle bzw. Antriebsachse entweicht. Bei einem offenen Behälter wird daher die Antriebsachse von oben her angebracht, so dass sie die Phasengrenze zur Umgebung durchbricht. Ist die Antriebsachse unten im Behälter angebracht, muss die Welle mit einer Wellendichtung versehen werden, um das Produkt am Entweichen entlang der Antriebsachse zu hindern. Ist das Produkt hochviskos, wickelt es sich um die Welle und kann über die Antriebsachse entweichen. Die Gasphase kann dann auch über die Antriebsachse entweichen, da es keine definierte Phasengrenze gibt. In vielen Fällen soll die Gasphase ebenfalls nicht mit der Umgebung in Berührung kommen. Der Behälter kann unter Druck oder Vakuum stehen, was die Wellenabdichtung zusätzlich kompliziert.

Zur Abdichtung der Welle werden Reibkörper benutzt, wobei einer drehend (auf dem Rotor) ist und sich dem anderen statischen (auf dem Stator) anschmiegt, wobei beide mit minimalem Spiel aufeinander reiben. So wird die Leckage über die Welle gering gehalten. Durch Anpassen des Drucks auf den Reibkörper lässt sich die Leckage einstellen, abgestellt werden kann sie nicht.

Eine solche Konstruktion ist seit langem bekannt und nennt sich Stopfbüchse für einen plastischen und einen starren Reibkörper, Gleitringdichtung für zwei starre und Wellendichtring für einen elastischen und einen starren Reibkörper.

Es ist auch seit langem bekannt, dass es vorteilhaft ist, im Bereich der Reibung ein Schmiermittel aufzugeben, um die Reibung und somit den Verschleiss zu verringern. Somit wird die Standzeit des Reibkörpers wesentlich verlängert. Das Schmiermittel kann das Produkt selbst oder ein mit dem Produkt kompatibles Substrat sein.

Die Leckage ist das Substrat, das gemäss dem Druckgefälle im Spalt zwischen den Reibkörpern fliesst. Ist die Leckage gasförmig, kommt es bei steigendem Druckgefälle zwischen Produktraum und Umgebung zu sehr hohen volumetrischen Leckraten. Es ist daher vorteilhaft, den Spalt mit einer Flüssigkeit mittlerer Viskosität zu füllen. Die Leckage besteht dann aus dieser Flüssigkeit, und ihre Menge ist gemäss ihrer höheren Viskosität sehr viel niedriger. Wird der Vorraum zur Dichtung komplett mit einer Flüssigkeit gefüllt, spricht man von einer Sperrflüssigkeit. Diese Methode ist ebenfalls seit längerem bekannt. Üblich ist, zwei aufeinanderfolgende Dichtungen zu installieren, zwischen denen die Sperrflüssigkeit unter erhöhtem Druck gehalten wird. Die Leckage wird durch eine Verbindung zu einem Behälter, der mit der Sperrflüssigkeit gefüllt ist, ausgeglichen.

Die erwähnte Methode mit Sperrflüssigkeit hat den Nachteil, dass zwei Reibdichtungen auf der Welle benötigt werden. Diese brauchen mehr Platz auf der Welle, der nicht immer verfügbar ist. Fällt eine der beiden Dichtungen aus, führt das zu einem vermehrten, auch unkontrollierten Zufluss an Sperrflüssigkeit in den Produktraum oder die Umgebung. Da die andere Dichtung noch eine Weile funktionieren dürfte, entdeckt der Betreiber diese Leckage nicht sofort.

Es hat sich gezeigt, dass bei Wellen, die leicht exzentrisch drehen, da im Produktraum viskose Kräfte auftreten, verstärkt Leckagen auftreten. Im Fall der Stopfbüchse verformt sich der plastische Reibkörper (die Stopfbüchsschnur) derart, dass vermehrt Leckagen auftreten können. Da das Lager vor der Dichtung aussen angebracht wird, nimmt die Auslenkung der Welle zum Produktraum hin zu. Um diese Leckagen zu verringern, wird erfindungsgemäss die Stopfbüchse geteilt, so dass es zwei hintereinandergeschaltete Stopfbüchsen gibt, wobei die innere, dem Produktraum nähere, sich der Bewegung des Stators angleicht und die andere, die äussere, sich der Bewegung des Rotors anpasst. Um dies zu erreichen, wird das nicht mitlaufende Gehäuse der Stopfbüchse geteilt. Die äussere Brille wird mit einer Kraft beaufschlagt, die gegen die Packung drückt, wobei das Gehäuse der äusseren Stopfbüchse mit der Brille der inneren Stopfbüchse starr verbunden ist, so dass die Kraft auf dem Gehäuse der äusseren Packung sich über sein Gehäuse und Brille auf die innere Packung überträgt. Es entsteht ein Spalt zwischen innerer Packung und Brille, der durch die Druckkraft auf die Stopfbüchsschnur dichtet, aber keiner Reibkraft ausgesetzt ist. Diese Art der Teilung der Stopfbüchse wird schon länger angewendet, ist aber gegebenenfalls Voraussetzung für die vorliegende Erfindung.

Der Nachteil der Methode der Teilung der Stopfbüchse ist, dass die innere Stopfbüchse nur noch schlecht dynamisch dichtet. Wird ein Sperr- und Schmiermedium in den Zwischenraum zwischen innerer und äusserer Stopfbüchse eingegeben, fliesst dieses leicht in den Produktraum hinein. Eine Druckhaltung in diesem Zwischenraum ist praktisch nicht möglich, da der Druck im Prozessraum schwanken kann, was zu unkontrolliertem Fluss von Sperrmedium in den Produktraum führt. Die schwankende Dichtleistung der inneren Stopfbüchse verstärkt dieses Problem.

Beispielsweise sind derartige Vorrichtungen, bei denen diese Abdichtungen eingesetzt werden, Mischkneter, die sehr vielfältigen Zwecken dienen. Als erstes ist das Eindampfen mit Lösungsmittelrückgewinnung zu erwähnen, welches chargenweise oder kontinuierlich und oft auch unter Vakuum erfolgt. Hierdurch werden beispielsweise Destillationsrückstände und insbesondere Toluoldiisocyanate behandelt, aber auch Produktionsrückstände mit toxischen oder hochsiedenden Lösungsmitteln aus der Chemie und Pharmaproduktion, Waschlösungen und Lack-Schlämme, Polymerlösungen, Elastomerlösungen aus der Lösemittelpolymerisation, Klebstoffe und Dichtmassen.

Mit den Apparaten wird ferner eine kontinuierliche oder chargenweise Kontakttrocknung, wasser- und/oder lösemittelfeuchter Produkte, oftmals ebenfalls unter Vakuum, durchgeführt. Die Anwendung ist vor allem gedacht für Pigmente, Farbstoffe, Feinchemikalien, Additive, wie Salze, Oxyde, Hydroxyde, Antioxidantien, temperaturempfindliche Pharma- und Vitaminprodukte, Wirkstoffe, Polymere, synthetische Kautschuke, Polymersuspensionen, Latex, Hydrogele, Wachse, Pestizide und Rückstände aus der chemischen oder pharmazeutischen Produktion, wie Salze, Katalysatoren, Schlacken, Ablaugen gedacht. Anwendung finden diese Verfahren auch in der Lebensmittelproduktion, beispielsweise bei der Herstellung und/oder Behandlung von Blockmilch, Zuckeraustauschstoffen, Stärkederivaten, Alginaten, zur Behandlung von Industrieschlämmen, Ölschlämmen, Bioschlämmen, Papierschlämmen, Lackschlämmen und allgemein zur Behandlung von klebrigen, krustenden zähpastösen Produkte, Abfallprodukten und Zellulosederivaten.

In einem Mischkneter kann eine Polykondensationsreaktion, meist kontinuierlich und meist in der Schmelze, stattfinden und wird vor allem verwendet bei der Behandlung von Polyamiden, Polyester, Polyacetaten, Polyimiden, Thermoplaste, Elastomere, Silikone, Harnstoffharze, Phenolharze, Detergentien und Düngemittel. Zum Beispiel findet sie Anwendung auf Polymerschmelzen nach einer Massepolymerisation auf Derivate der Methacrylsäure.

Stattfinden kann auch eine Polymerisationsreaktion, ebenfalls meist kontinuierlich. Dies wird angewendet auf Polyacrylate, Hydrogele, Polyole, thermoplastische Polymere, Elastomere, syndiotaktisches Polystyrol und Polyacrylamide.

In Mischknetern kann ein Entgasen und/oder Devolatilisieren stattfinden. Angewendet wird dies auf Polymerschmelzen, nach (Co-) Polymerisation von Monomer(en), nach Kondensation von Polyester oder Polyamidschmelzen, auf Spinnlösungen für synthetische Fasern und auf Polymer- oder Elastomergranulate bzw. -pulver im festen Zustand.

Ganz allgemein können im Mischkneter feste, flüssige oder mehrphasige Reaktionen stattfinden. Dies gilt vor allem für Backreaktionen, bei der Behandlung von Flusssäure, Stearaten, Cyaniden, Polyphosphaten, Cyanursäuren, Zellulosederivaten, -ester, -äther, Polyacetalharzen, Sulfanilsäuren, Cu-Phthalocyaninen, Stärkederivaten, Ammoniumpolyphosphaten, Sulfonaten, Pestiziden und Düngemittel.

Des weiteren können Reaktionen fest-/gasförmig (z.B. Karboxylierung) oder flüssig-/gasförmig stattfinden. Angewendet wird dies bei der Behandlung von Acetaten, Aciden, Kolbe-Schmitt-Reaktionen, z.B. BON, Na-Salicylaten, Parahydroxibenzoaten und Pharmaprodukten.

Reaktionen flüssig/flüssig erfolgen bei Neutralisationsreaktionen und Umesterungsreaktionen.

Ein Lösen und/oder Entgasen in derartigen Mischknetern findet bei Spinnlösungen für synthetische Fasern, Polyamiden, Polyester und Zellulosen statt.

Ein sogenanntes Flushen findet bei der Behandlung bzw. Herstellung von Pigmenten statt.

Eine Solid-State-Nachkondensation findet bei der Herstellung bzw. Behandlung von Polyester, Polycarbonaten und Polyamiden statt, ein kontinuierliches Anmaischen z.B. bei der Behandlung von Fasern, z.B. Zellulosefasern mit Lösungsmitteln, eine Kristallisation aus der Schmelze oder aus Lösungen bei der Behandlung von Salzen, Feinchemikalien, Polyolen, Alkoholaten, ein Compoundieren, Mischen (kontinuierlich und/oder chargenweise) bei Polymeren-Mischungen, Silikonmassen, Dichtmassen, Flugasche, ein Koagulieren (insbesondere kontinuierlich) bei der Behandlung von Polymersuspensionen.

In einem Mischkneter können auch multifunktionale Prozesse kombiniert werden, beispielsweise Erhitzen, Trocknen, Schmelzen, Kristallisieren, Mischen, Entgasen, Reagieren - dies alles kontinuierlich oder chargenweise. Hergestellt bzw. behandelt werden dadurch Polymere, Elastomere, anorganische Produkte, Rückstände, Pharmaprodukte, Lebensmittelprodukte, Druckfarben.

In Mischknetern kann auch eine Vakuumsublimation/ Desublimation stattfinden, wodurch chemische Vorprodukte, z.B. Anthrachinon, Metallchloride, Ferrozene, Jod, metallorganische Verbindungen usw. gereinigt werden. Ferner können pharmazeutische Zwischenprodukte hergestellt werden.

Eine kontinuierliche Trägergas-Desublimation findet z.B. bei organischen Zwischenprodukten, z.B. Anthrachinon und Feinchemikalien statt.

Im Wesentlichen werden einwellige und zweiwellige Mischkneter unterschieden. Ein einwelliger Mischkneter ist beispielsweise aus der AT 334 328, der CH 658 798 A5 oder der CH 686 406 A5 bekannt. Dabei ist in einem Gehäuse eine axial verlaufende, mit Scheibenelementen besetzte und um eine Drehachse in einer Drehrichtung drehende Welle angeordnet. Diese bewirkt den Transport des Produktes in Transportrichtung. Zwischen den Scheibenelementen sind Gegenelemente am Gehäuse feststehend angebracht. Die Scheibenelemente sind in Ebenen senkrecht zur Kneterwelle angeordnet und bilden zwischen sich freie Sektoren, welche mit den Ebenen von benachbarten Scheibenelementen Kneträume ausformen.

Eine mehrwellige Misch- und Knetmaschine wird in der CH-A 506 322 beschrieben. Dort befinden sich auf einer Welle radiale Scheibenelemente und zwischen den Scheiben angeordnete axial ausgerichtete Knetbarren. Zwischen diese Scheiben greifen von der anderen Welle rahmenartig geformte Misch- und Knetelemente ein. Diese Misch- und Knetelemente reinigen die Scheiben und Knetbarren der ersten Welle. Die Knetbarren auf beiden Wellen reinigen wiederum die Gehäuseinnenwand.

Diese bekannten zweiwelligen Mischkneter haben den Nachteil, dass sie aufgrund des achtförmigen Gehäusequerschnitts im Bereich der Verbindung der beiden Wellengehäuse eine Schwachstelle aufweisen. In diesem Bereich entstehen bei der Verarbeitung zäher Produkte und/oder bei Prozessen, die unter Druck ablaufen, hohe Spannungen, die nur durch aufwendige konstruktive Massnahmen beherrscht werden können.

Ein Mischkneter der oben genannten Art ist beispielsweise aus der EP 0 517 068 B1 bekannt. Bei ihm drehen in einem Mischergehäuse zwei achsparallel verlaufende Wellen entweder gegensinnig oder gleichsinnig. Dabei wirken auf Scheibenelementen aufgesetzte Mischbarren miteinander. Neben der Funktion des Mischens haben die Mischbarren die Aufgabe, produktberührte Flächen des Mischergehäuses, der Wellen und der Scheibenelemente möglichst gut zu reinigen und damit ungemischte Zonen zu vermeiden. Insbesondere bei stark kompaktierenden, aushärtenden und krustenden Produkten führt die Randgängigkeit der Mischbarren zu hohen örtlichen mechanischen Belastungen der Mischbarren und der Wellen. Diese Kraftspitzen treten insbesondere beim Eingriff der Mischbarren in denjenigen Zonen auf, wo das Produkt schlecht ausweichen kann. Solche Zonen sind z.B. dort gegeben, wo die Scheibenelemente auf der Welle aufgesetzt sind.

Ferner ist aus der DE 199 40 521 A1 ein Mischkneter der o.g. Art bekannt, bei welchem die Tragelemente im Bereich der Knetbarren eine Ausnehmung ausbilden, damit der Knetbarren eine möglichst grosse axiale Erstreckung aufweist. Ein derartiger Mischkneter hat eine hervorragende Selbstreinigung aller produktberührten Flächen des Gehäuses und der Wellen, hat aber die Eigenschaft, dass die Tragelemente der Knetbarren aufgrund der Bahnen der Knetbarren Ausnehmungen erforderlich machen, die zu komplizierten Tragelementformen führen. Daraus resultieren zum einen ein aufwendiges Herstellungsverfahren und zum zweiten bei einer mechanischen Beanspruchung lokale Spannungsspitzen an der Welle und den Tragelementen. Diese Spannungsspitzen, welche hauptsächlich bei den scharfkantigen Ausnehmungen und Dickenänderungen, insbesondere im Bereich, wo die Tragelemente auf den Wellenkern aufgeschweisst sind, auftreten, sind Auslöser für Risse in der Welle und den Tragelementen aufgrund von Materialermüdung.

Bei dieser Anordnung nach der US 2 684 274 A werden drei Dichtungen gezeigt, die jeweils durch eine Kammer, die mit Schmiermittel gefüllt werden kann, getrennt sind.

Bei einer Anordnung nach der US 2 864 631 A ist eine Vielzahl von Dichtungsringen um eine Welle angeordnet. Fast jeder Dichtungsring hat seine eigene Versorgung für ein Schmiermittel.

Bei einer Anordnung nach der GB 1 081 867 A sind zwei gleichartige Dichtungen gezeigt, die lediglich durch einen Raum voneinander getrennt sind. Das Schmiermittel verteilt sich von selbst in die beiden Ringe der Dichtung.

Die GB 1 088 035 A zeigt eine Vorrichtung, bei der nur eine Stopfbüchse und eine weitere, mechanische Dichtung vorgesehen ist. Vor der Stopfbüchse befindet sich eine Kammer, welche mit einem flüssigen Monomer der gleichen Art gefüllt wird, wie der eigentliche Produktraum. Für die mechanische Dichtung ist eine Kammer vorgesehen, in die ein Schmiermittel für die mechanischen Dichtungsoberflächen eingefüllt wird.

### Aufgabe

Aufgabe der vorliegenden Erfindung ist es, eine Abdichtung der Lagerung einer drehenden Welle gegenüber einem feststehenden Gehäuse beziehungsweise Gehäuseteilen wesentlich zu verbessern.

### Lösung der Aufgabe

Zur Lösung der Aufgabe führt, dass bei Vakuumbetrieb eine definierte Menge an Flüssigkeit, das als Sperr- und Schmiermittel für die dynamische Dichtung der Welle zum Gehäuseteil hin dient, von aussen auf die dynamische Dichtung aufgegeben wird, welches bis auf einen Restüberschuss durch das Vakuum innerhalb der dynamischen Dichtung in diese eingezogen wird und dadurch eine effektive Sperrung und Dichtung bildet, während bei Druckbetrieb die Sperr- und Schmierflüssigkeit zwischen die dynamische Dichtung und die andere Dichtung eingebracht wird.

Das Problem der vermehrten Leckagen von Sperr- und Schmiermittel wird folgendermassen gelöst:
- bei Vakuumbetrieb wird mit Hilfe einer Dosiereinrichtung die kombinierte Sperr- und Schmierflüssigkeit von aussen auf die äussere Stopfbüchse aufgegeben. Die Dosiermenge an Sperr- und Schmierflüssigkeit wird so eingestellt, dass eine möglichst kleine überschüssige Menge von der Welle heruntertropft, die nicht durch den Unterdruck in die Stopfbüchse einzieht. Mit der Sammlung und Quantifizierung der Sperr- und Schmierflüssigkeit, die von der Welle tropft, lässt sich die richtige Menge einstellen.
- bei Druckbetrieb wird die Sperr- und Schmierflüssigkeit in der Nähe der äusseren Stopfbüchse von innen aufgegeben. Zur richtigen Einstellung der Menge an Sperr- und Schmierflüssigkeit kann das Produkt analysiert werden, oder die überschüssige Sperr- und Schmierflüssigkeit wird von der Welle durch einen Abstreifer oder Ring auf der Welle abgeschieden und in einem Behälter mit einem Schleusensystem am Unterteil des Gehäuses gesammelt und quantifiziert.

Das beschriebene Abscheidungssystem der Sperr- und Schmierflüssigkeit kann auch im Vakuumbetrieb von Vorteil sein, wobei es dann nicht die überschüssige Sperr- und Schmierflüssigkeit, sondern die dichtende Sperr- und Schmierflüssigkeit abscheidet und so verhindert, dass diese in den Produktraum gelangt.

Es ist wichtig zu unterstreichen, dass ein atmosphärischer Betrieb im Produktraum mit der beschriebenen Erfindung nicht möglich ist. Es sollte zumindest ein leichter Unterdruck oder Überdruck im Produktraum herrschen, weil sonst die Sperr- und Schmierflüssigkeit nicht in die Stopfbüchse fliesst, diese dann nicht mehr schmiert und die Schnüre durch Reibung geschädigt werden.

Die Ausgestaltung der Dosiereinrichtung für die Sperr- und Schmierflüssigkeit ist von grosser Wichtigkeit. Sie sollte einen konstanten Durchfluss an Sperr- und Schmierflüssigkeit liefern. Volumetrische Dosierpumpen sind im Prinzip möglich, aber in der Praxis teuer und wartungsaufwendig. Erfindungsgemäss wird eine Lösung gravimetrisch mit Hilfe eines Tropfölers, der oberhalb der Dosierstelle angebracht ist, eingebracht. Der Tropföler basiert auf dem Effekt, dass der hydrostatische Druck vor dem Einstellventil grösser ist als an der Behälterpegeloberfläche. Voraussetzung für einen reibungslosen Betrieb ist, dass der Druck nach dem Einstellventil dem an der Behälterpegeloberfläche entspricht. In einer Ausgestaltung dieser Erfindung wird eine Ausgleichsleitung installiert, die den Raum der Pegeloberfläche mit der Dosierstelle verbindet.

Dem geschlossenen Sperr- und Schmierflüssigkeitsraum kann eine Stickstoffzuleitung zugeordnet werden, wobei die Stickstoffzufuhrmenge geregelt ist und das Druckniveau über ein Überströmventil eingestellt wird. Der Vorteil dieser Vorrichtung ist, dass der Stickstoff dann gleichzeitig den Raum um die Dosierstelle über die Ausgleichsleitung inertisiert.

Eine weitere verbesserte Massnahme dieser Erfindung ist die Überwachung der Stopfbüchsreibung mit Hilfe einer Temperatursonde an der Packung. Somit kann das Vorhandensein von Schmiermittel im Betrieb geprüft werden, da sonst die erhöhte Reibung zu einem charakteristischen Temperaturanstieg führt.

Die Erfindung erlaubt auch den wechselseitigen Überdruck- oder Vakuumbetrieb im Produktraum. In diesem Falle wird die Sperr- und Schmierflüssigkeitszuleitung gesplittet und mit Hilfe von Absperrventilen vor oder nach der äusseren Packung zudosiert. Eine separate Dosiereinheit ist natürlich ebenfalls möglich.

Die Kombination dieser Erfindung mit einer pneumatischen Anpressung der Dichtung (siehe DE20011053293) hat sich ebenfalls als vorteilhaft erwiesen.

### Figurenbeschreibung

Weitere Vorteile, Merkmale und Einzelheiten der Erfindung ergeben sich aus der nachfolgenden Beschreibung bevorzugter Ausführungsbeispiele, sowie anhand der Zeichnung; diese zeigt in
**Figur 1** einen Längsausschnitt einer Lagerung einer drehenden Welle nach einem Wellendurchbruch aus einem stehenden Gehäuse, welches einen Produktraum umschliesst, in welchem der Druck kleiner ist als ausserhalb;
**Figur 2** einen Teillängsschnitt einer Lagerung einer drehenden Welle nach einem Wellendurchbruch aus einem stehenden Gehäuse, welches einen Produktraum umschliesst, in dem der Druck grösser ist als ausserhalb.

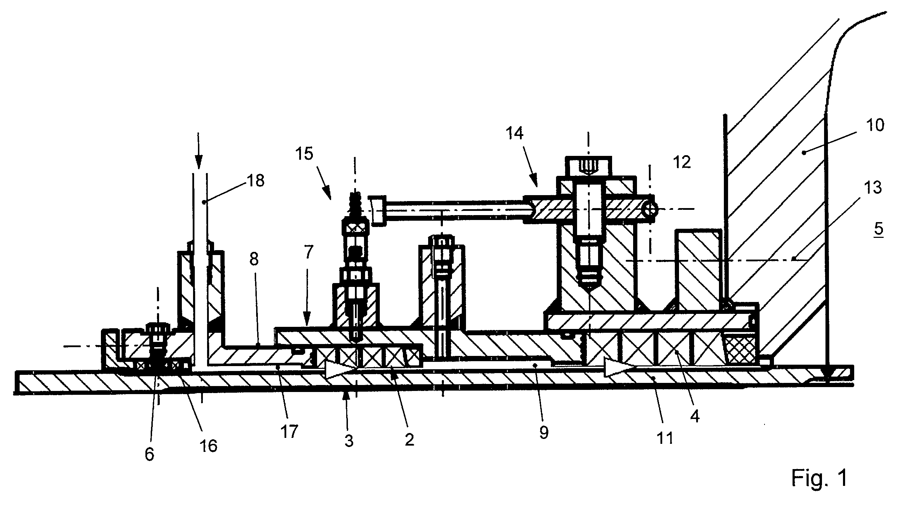

Gemäss Figur 1 umschliesst ein feststehendes Gehäuse 10 einen Produktraum 5, in dem sich ein zu behandelndes Produkt befindet. Dieses Produkt wird durch nicht näher gezeigte Misch- und Knetelemente behandelt, die sich auf einer drehenden Welle 3 befinden. Derartige Misch- und Knetelemente sind beispielsweise in den im Stand der Technik genannten Schriften zu finden.

Die Welle 3 durchbricht mit einer Antriebsachse 11 das Gehäuse 10, so dass die Antriebsachse 11 ausserhalb des Gehäuses 10 angeordnet ist. Dort wird sie von mehreren Gehäuseteilen umfangen. Diese Gehäuseteile sind ringförmig ausgebildet.

Ein erstes Gehäuseteil 12 ist feststehend ausgebildet und über strichpunktiert angedeutete Verbindungsmittel 13 mit dem Gehäuse 10 verbunden. Zwischen diesem ersten Gehäuseteil 12 und der drehenden Welle bzw. Antriebsachse 11 ist eine erste Dichtung vorgesehen, welche aus elastischen Kompensationselementen 4 besteht.

Das erste Gehäuseteil 12 wird von einem zweiten Gehäuseteil 7 untergriffen, welches auch als Packungsgehäuse 7 bezeichnet werden kann. Dabei sind Packungsgehäuse 7 und erstes Gehäuseteil 12 über Zuganker 14 miteinander verbunden, so dass das Packungsgehäuse 7 gegen die elastischen Kompensationselemente 4 gedrückt wird und diese verspannt.

Das Packungsgehäuse 7 stützt sich ferner über eine Stopfbüchspackung 2 gegen die drehende Antriebsachse 11 ab, wobei hierdurch eine dynamische Dichtung entsteht, die einer exzentrischen Bewegung der Antriebsachse 11 folgt. Diese Stopfbüchspackung 2 kann über einen Pneumatikanschluss 15 unter Druck gesetzt werden.

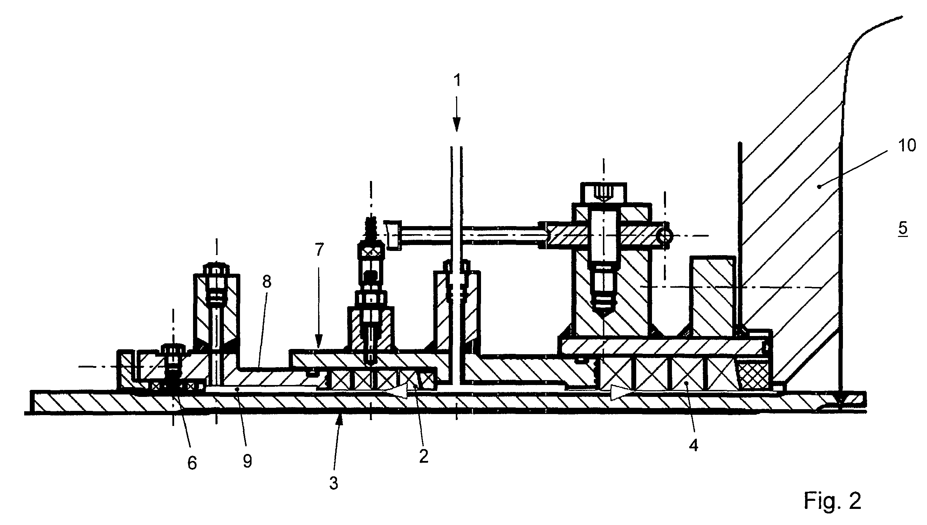

Zwischen der Stopfbüchspackung 2 und den elastischen Kompensationselementen 4 ist ein Sammelraum 9 vorgesehen, in den eine in Figur 2 gezeigte Zuleitung 1 einmündet.

Ein weiteres Gehäuseteil 8 untergreift das Packungsgehäuse 7 und dient der Stopfbüchsanpressung. Auch hierzu sind nicht näher gezeigte Zuganker zwischen dem Packungsgehäuse 7 und diesem weiteren Gehäuseteil 8 vorgesehen. Dieses Gehäuseteil 8 stützt sich ferner über Dichtungen 16 gegen die Antriebsachse ab, wobei im Bereich der Dichtung 16 auch ein Anschluss 6 für eine Stickstoffüberlagerung vorgesehen ist.

Zwischen dieser Dichtung 16 und der Stopfbüchspackung 2 ist ein Sammelraum 17 vorgesehen, in den eine Zuleitung 18 einmündet.

Die Funktionsweise der vorliegenden Erfindung ist folgende:
Bei der in Figur 1 gezeigten Anordnung ist die Zuleitung 1 verschlossen, die Zuleitung 18 dagegen geöffnet. Das bedeutet, dass Sperr- und Schmiermittel durch die Zuleitung 18 in den Sammelraum 17 gelangen kann. In diesem Fall ist der Druck im Produktraum 5 kleiner als ausserhalb, d.h., es besteht ein gewisses Vakuum, so dass das Sperr- und Schmiermittel durch die Stopfbüchspackung 2 angesaugt wird. Auf diese Weise kann es seine Funktion als Sperr- und Schmiermittel sowohl für die Stopfbüchspackung 2 als auch für die elastischen Kompensationselemente 4 erfüllen.

Herrscht dagegen in dem Produktraum ein Druck, der grösser ist als ausserhalb, d.h., ein Überdruck, so findet die Anordnung nach Figur 2 Anwendung. Das bedeutet, dass Sperr- und Schmiermittel durch die Zuleitung 1 in den Sammelraum 9 eingegeben wird, von wo es sowohl die elastischen Kompensationselemente 4 als auch die Stopfbüchspackung 2 durchdringen kann.

### Bezugszeichenliste

| | | | | | |
|---|---|---|---|---|---|
| 1 | Zuleitung | 34 | | 167 | |
| 2 | Stopfbüchspackung | 35 | | 68 | |
| 3 | Welle | 36 | | 69 | |
| 4 | Kompensationselemente | 37 | | 70 | |
| 5 | Produktraum | 38 | | 71 | |
| 6 | Anschluss | 39 | | 72 | |
| 7 | Packungsgehäuse | 40 | | 73 | |
| 8 | Gehäuseteil | 41 | | 74 | |
| 9 | Sammelraum | 42 | | 75 | |
| 10 | Gehäuse | 43 | | 76 | |
| 11 | Antriebsachse | 44 | | 77 | |
| 12 | Gehäuseteil | 45 | | 78 | |
| 13 | Verbindungsmittel | 46 | | 79 | |
| 14 | Zuganker | 47 | | | |
| 15 | Pneumatikanschluss | 48 | | | |
| 16 | Dichtung | 49 | | | |
| 17 | Sammelraum | 50 | | | |
| 18 | Zuleitung | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur Behandlung eines Produktes, insbesondere eines zähviskos, pastösen Produktes mit mindestens einer drehenden Welle (3, 11) in einem Produktraum (5), wobei eine Antriebsachse (11) der Welle (3) ausserhalb des Produktraumes (5) in einem aus mehreren Teilen (7, 8, 12) bestehenden Gehäuse gelagert und abgedichtet ist und die Abdichtung durch zumindest zwei Dichtungen (2, 4) bewirkt wird, wobei eine dynamische Dichtung (2) einer exzentrischen Bewegung der Welle (3) folgt und eine dynamische Abdichtung der drehenden Welle (3) übernimmt, während eine andere Dichtung (4) eine exzentrische Bewegung der Welle (3) gegenüber dem Gehäuse durch plastische oder elastische Verformung ausgleicht und somit eine Undichtigkeit zwischen dem Gehäuseteil (12), das sich exzentrisch bewegt, und einem starren Gehäuse (10) verhindert,
**dadurch gekennzeichnet,**
**dass** bei Vakuumbetrieb eine definierte Menge an Flüssigkeit, das als Sperr- und Schmiermittel für die dynamische Dichtung (2) der Welle (3) zum Gehäuseteil (7) hin dient, von aussen der dynamischen Dichtung (2) aufgegeben wird, welches bis auf einen Restüberschuss durch das Vakuum innerhalb der dynamischen Dichtung (2) in diese eingezogen wird und dadurch eine effektive Sperrung und Dichtung bildet, während bei Druckbetrieb die Sperr- und Schmierflüssigkeit zwischen die dynamische Dichtung (2) und die andere Dichtung (4) eingebracht wird.

2. Verfahren nach Anspruch 1, **dadurch gekennzeichnet, dass** ein Überschuss an Sperr- und Schmiermittel gesammelt und gemessen wird, um entsprechend diesem Überschuss durch Einstellen die Dosiermenge das Sperr- und Schmiermittel zu minimisieren, aber immer eine ausreichende Dosiermenge für die effektive dynamische Dichtung (2) eines Wellendurchbruchs bereitzustellen.

3. Verfahren nach Anspruch 1 und 2, **dadurch gekennzeichnet, dass** das Sperr- und Schmiermittel, das die Dichtung (2) durchfliesst oder im Überschuss vor der Dichtung anfällt, mechanisch abgetrennt und gesammelt sowie gegebenenfalls ausgeschleust wird.

4. Verfahren nach wenigstens einem der Ansprüche 1 bis 3, **dadurch gekennzeichnet, dass** eine Reibung der Dichtung (2) mit Hilfe einer Temperaturmessung überwacht wird.

5. Verfahren nach wenigstens einem der Ansprüche 1 bis 4, **dadurch gekennzeichnet, dass** die Dichtung (2) pneumatisch gegen die drehende Welle (3, 11) angepresst wird.

6. Vorrichtung zur Behandlung eines Produktes, insbesondere eines zähviskos, pastösen Produktes mit mindestens einer drehenden Welle (3, 11) in einem Produktraum (5), wobei eine Antriebsachse (11) der Welle (3) ausserhalb des Produktraumes (5) in einem aus mehreren Teilen (7, 8, 12) bestehenden Gehäuse gelagert und abgedichtet ist und die Abdichtung durch zumindest zwei Dichtungen (2, 4) bewirkt wird, wobei eine dynamische Dichtung (2) einer exzentrischen Bewegung der Welle (3) folgt und eine dynamische Abdichtung der drehenden Welle (3) übernimmt, während eine andere Dichtung (4) eine exzentrische Bewegung der Welle (3) gegenüber dem Gehäuse durch plastische oder elastische Verformung ausgleicht und somit eine Undichtigkeit zwischen dem Gehäuseteil (12), das sich exzentrisch bewegt, und einem starren Gehäuse (10) verhindert, **dadurch gekennzeichnet, dass** der dynamischen Dichtung (2) beidseits ein Sammelraum (9, 17) zwischen Welle (3) und Gehäuseteilen (7, 12) zur Aufnahme eines dosierten Sperr- und Schmiermittels zugeordnet ist, nämlich ein Sammelraum (17) vor der dynamischen Dichtung (2) zur Aufnahme des Mittels bei Vakuumbetrieb und ein Sammelraum (9) zwischen der dynamischen Dichtung (2) und einer anderen Dichtung bei Druckbetrieb.

7. Vorrichtung nach Anspruch 6, **dadurch gekennzeichnet, dass** eine Zuleitung (1, 18) für das Sperr -und Schmiermittel in zumindest einen Sammelraum (9,17) verschliessbar ist.

8. Vorrichtung nach Anspruch 6 oder 7, **dadurch gekennzeichnet, dass** für eine Dosierung des Sperr- und Schmiermittels eine Dosierpumpe vorgesehen ist.

9. Vorrichtung nach wenigstens einem der Ansprüche 6 bis 8, **dadurch gekennzeichnet, dass** die Dosierung an Sperr- und Schmiermittel mit Hilfe eines Tropfölers geschieht.

10. Vorrichtung nach Anspruch 9, **dadurch gekennzeichnet, dass** eine separate Ausgleichleitung zwischen einer Gasoberfläche des Tropfölbehälters und einer Dosierstelle des Sperr- und Schmiermittels vorgesehen ist.

11. Vorrichtung nach Anspruch 9 oder 10, **dadurch gekennzeichnet, dass** über eine separate Ausgleichleitung Inertisierungsgas dem Tropfölgasraum zuführbar und die Menge und das Druckniveau im Tropfölgasraum einstellbar ist.

12. Vorrichtung nach wenigstens einem der Ansprüche 6 bis 11, **dadurch gekennzeichnet, dass** zumindest einem Sammelraum (17) eine Stickstoffüberlagerung (6) zugeordnet ist.

## Claims

1. A method for treating a product, in particular a highly viscous, pasty product, with at least one rotating shaft (3, 11) in a product space (5), wherein a drive axle (11) of the shaft (3) is mounted and sealed outside the product space (5) in a housing consisting of a plurality of parts (7, 8, 12) and the sealing is effected by at least two seals (2, 4), wherein a dynamic seal (2) follows an eccentric movement of the shaft (3) and takes over dynamic sealing of the rotating shaft (3), while another seal (4) compensates for an eccentric movement of the shaft (3) relative to the housing by plastic or elastic deformation and thus prevents a leak between the housing part (12) which moves eccentrically and a rigid housing (10),
**characterised in that**
in the case of vacuum operation a defined quantity of liquid which acts as a blocking and lubricating medium for the dynamic seal (2) of the shaft (3) towards the housing part (7) is charged to the dynamic seal (2) from the outside, which medium apart from a residual excess is drawn into the dynamic seal (2) by the vacuum therein and thereby forms an effective blocking and seal, whereas in the case of pressure operation the blocking and lubricating liquid is introduced between the dynamic seal (2) and the other seal (4).

2. A method according to Claim 1, **characterised in that** an excess of blocking and lubricating medium is collected and measured in order to minimise the blocking and lubricating medium corresponding to this excess by setting the metering quantity, but always to provide a sufficient metering quantity for the effective dynamic seal (2) of a shaft opening.

3. A method according to Claim 1 and 2, **characterised in that** the blocking and lubricating medium which flows through the seal (2) or occurs in the excess before the seal is mechanically separated off and collected and also optionally discharged.

4. A method according to at least one of Claims 1 to 3, **characterised in that** a friction of the seal (2) is monitored with the aid of a temperature measurement.

5. A method according to at least one of Claims 1 to 4, **characterised in that** the seal (2) is pressed pneumatically against the rotating shaft (3, 11).

6. A device for treating a product, in particular a highly viscous, pasty product with at least one rotating shaft (3, 11) in a product space (5), wherein a drive axle (11) of the shaft (3) is mounted and sealed outside the product space (5) in a housing consisting of a plurality of parts (7, 8, 12) and the sealing is effected by at least two seals (2, 4), wherein a dynamic seal (2) follows an eccentric movement of the shaft (3) and takes over dynamic sealing of the rotating shaft (3), while another seal (4) compensates for an eccentric movement of the shaft (3) relative to the housing by plastic or elastic deformation and thus prevents a leak between the housing part (12) which moves eccentrically and a rigid housing (10), **characterised in that** a collecting space (9, 17) is associated with the dynamic seal (2) on both sides between the shaft (3) and housing parts (7, 12) to receive a metered blocking and lubricating medium, namely a collecting space (17) before the dynamic seal (2) to receive the medium in the case of vacuum operation and a collecting space (9) between the dynamic seal (2) and another seal in the case of pressure operation.

7. A device according to Claim 6, **characterised in that** a feed line (1, 18) for feeding the blocking and lubricating medium can be closed into at least one collecting space (9, 17).

8. A device according to Claim 6 or 7, **characterised in that** a metering pump is provided for metering the blocking and lubricating medium.

9. A device according to at least one of Claims 6 to 8, **characterised in that** the metering of blocking and lubricating medium takes place with the aid of a drip-feed lubricator.

10. A device according to Claim 9, **characterised in that** a separate equalising line is provided between a gas surface of the drip-feed oil container and a metering point of the blocking and lubricating medium.

11. A device according to Claim 9 or 10, **characterised in that** inerting gas can be supplied to the drip-feed oil gas space via a separate equalising line and the quantity and the pressure level in the drip-feed oil gas space is adjustable.

12. A device according to at least one of Claims 6 to 11, **characterised in that** a nitrogen blanket (6) is associated with at least one collecting space (17).

## Revendications

1. Procédé pour manipuler un produit, en particulier un produit pâteux visqueux à l'aide d'au moins un arbre rotatif (3, 11) dans un espace à produit (5), un axe d'entraînement (11) de l'arbre (3) étant monté et rendu étanche à l'extérieur de l'espace à produit (5) dans un boîtier composé de plusieurs parties (7, 8, 12) et l'étanchéité étant réalisée par au moins deux joints d'étanchéité (2, 4), un joint d'étanchéité dynamique (2) suivant un mouvement excentrique de l'arbre (3) et assurant une d'étanchéité dynamique de l'arbre rotatif (3), tandis qu'un autre joint d'étanchéité (4) compense un mouvement excentrique de l'arbre (3) par rapport au boîtier par déformation plastique ou élastique et empêche de ce fait une non-étanchéité entre la partie de boîtier (12) qui se déplace de manière excentrique et un boîtier rigide (10),
**caractérisé par le fait**
**qu'**en cas de fonctionnement à vide, une quantité définie de liquide, qui sert de moyen de blocage et de lubrification pour le joint d'étanchéité dynamique (2) de l'arbre (3) vers la partie de boîtier (7), est appliquée de l'extérieur du joint d'étanchéité dynamique (2), lequel est aspiré, à un surplus résiduel près, par le vide à l'intérieur du joint d'étanchéité dynamique (2), dans ce dernier et constitue de ce fait un blocage et une étanchéité efficaces, tandis qu'en cas de fonctionnement sous pression, le liquide de blocage et de lubrification est introduit entre le joint d'étanchéité dynamique (2) et l'autre joint d'étanchéité (4).

2. Procédé selon la revendication 1, **caractérisé par le fait qu'**un surplus de moyen de blocage et de lubrification est collecté et mesuré pour minimiser, en fonction de ce surplus, par réglage de la quantité de dosage, le moyen de blocage et de lubrification, mais pour toujours mettre à disposition une quantité de dosage suffisante pour le joint d'étanchéité dynamique effectif (2) d'un passage d'arbre.

3. Procédé selon la revendication 1 et 2, **caractérisé par le fait que** le moyen de blocage et de lubrification qui traverse le joint d'étanchéité (2) ou est présent dans le surplus ou devant le joint d'étanchéité est séparé et collecté mécaniquement ainsi qu'éventuellement éliminé.

4. Procédé selon au moins l'une des revendications 1 à 3, **caractérisé par le fait qu'**un frottement du joint d'étanchéité (2) est surveillé à l'aide d'une mesure de température.

5. Procédé selon au moins l'une des revendications 1 à 4, **caractérisé par le fait que** le joint d'étanchéité (2) est pressé de manière pneumatique contre l'arbre rotatif (3, 11).

6. Dispositif pour manipuler un produit, en particulier un produit pâteux visqueux avec au moins un arbre rotatif (3, 11) dans un espace à produit (5), un axe d'entraînement (11) de l'arbre (3) étant monté et rendu étanche à l'extérieur de l'espace à produit (5) dans un boîtier composé de plusieurs parties (7, 8, 12) et l'étanchéité étant réalisée par au moins deux joints d'étanchéité (2, 4), un joint d'étanchéité dynamique (2) suivant un mouvement excentrique de l'arbre (3) et assurant une d'étanchéité dynamique de l'arbre rotatif (3), tandis qu'un autre joint d'étanchéité (4) compense un mouvement excentrique de l'arbre (3) par rapport au boîtier par déformation plastique ou élastique et empêche de ce fait une non-étanchéité entre la partie de boîtier (12) qui se déplace de manière excentrique et un boîtier rigide (10), **caractérisé par le fait qu'**au joint d'étanchéité dynamique (2) est associé, de part et d'autre un espace de collecte (9, 17) entre l'arbre (3) et les parties de boîtier (7, 12) destiné à recevoir un moyen de blocage et de lubrification dosé, notamment un espace de collecte (17) devant le joint d'étanchéité dynamique (2) destiné à recevoir le moyen en cas de fonctionnement sous vide et un espace de collecte (9) entre le joint d'étanchéité dynamique (2) et un autre joint d'étanchéité en cas de fonctionnement sous pression.

7. Dispositif selon la revendication 6, **caractérisé par le fait qu'**un conduit d'alimentation (1, 18) de moyen de blocage et de lubrification dans au moins un espace de collecte (9, 17) peut être obturé.

8. Dispositif selon la revendication 6 ou 7, **caractérisé par le fait qu'**une pompe de dosage est prévue pour un dosage du moyen de blocage et de lubrification.

9. Dispositif selon au moins l'une des revendications 6 à 8, **caractérisé par le fait que** le dosage de moyen de blocage et de lubrification a lieu à l'aide d'un lubrificateur par goutte.

10. Dispositif selon la revendication 9, **caractérisé par le fait qu'**un conduit d'équilibrage séparé est prévu entre une surface de gaz du récipient de lubrification par goutte et un point de dosage du moyen de blocage et de lubrification.

11. Dispositif selon la revendication 9 ou 10, **caractérisé par le fait que** par un conduit d'équilibrage séparé peut être alimenté vers l'espace à gaz du lubrificateur par goutte un gaz d'inertisation et sont réglables la quantité et le niveau de pression dans l'espace à gaz du lubrificateur par goutte.

12. Dispositif selon au moins l'une des revendications 6 à 11, **caractérisé par le fait qu'**à au moins un espace de collecte (17) est associée une superposition d'azote (6).
